# EUROPEAN PATENT SPECIFICATION

(11) **EP 2 022 154 B1**
(45) Date of publication and mention of the grant of the patent: **14.10.2015**
(21) Application number: 06748011.1
(22) Date of filing: 30.05.2006
(51) Int. Cl.: H02J 3/24, H02J 3/18

(54) **THYRISTOR CONTROLLED SERIES CAPACITOR ADAPTED TO DAMP SUB SYNCHRONOUS RESONANCES**
FÜR DIE DÄMPFUNG VON SUBSYNCHRONRESONANZEN AUSGELEGTER THYRISTORGESTEUERTER REIHENKONDENSATOR
CAPACITÉ EN SÉRIE COMMANDÉE PAR THYRISTOR APTE À ATTÉNUER DES RÉSONANCES SOUS-SYNCHRONES

(43) Date of publication of application: 11.02.2009
(73) Proprietor: ABB RESEARCH LTD., 8050 Zürich (CH)
(72) Inventor: ZHOU, Changchun, Beijing 100022 (CN); LIU, Quianjin, Beijing 100101 (CN); ÄNGQUIST, Lennart, 745 71 Enköping (SE)
(74) Representative: Kock, Ina
(86) International application number: PCT/SE2006/050171
(87) International publication number: WO 2007/139461

(56) References cited:
- US-A- 5 489 838
- US-A- 5 801 459
- GUSTAFSON E ET AL: "Subsynchronous resonance. A controller for active damping", CONTROL APPLICATIONS, 1995., PROCEEDINGS OF THE 4TH IEEE CONFERENCE ON ALBANY, NY, USA 28-29 SEPT. 1995, NEW YORK, NY, USA,IEEE, US, 28 September 1995 (1995-09-28), pages 389-394, XP010207477, DOI: 10.1109/CCA.1995.555735 ISBN: 978-0-7803-2550-0
- GUSTAFSON E. ET AL.: 'Subsynchronous resonance. A controller for active damping' PROCEEDINGS OF THE 4TH IEEE CONFERENCE ON CONTROL APPLICATIONS (CAT. NO. 95CH35764, IEEE, NEW YORK, NY, USA 1995, pages 389 - 394, XP010207477
- BAKER D.H. ET AL.: 'Subsynchronous resonance studies and mitigation methods for series capacitor applications' PES 2005 CONFERENCE AND EXPOSITION IN AFRICA, PROCEEDINGS OF THE INAUGURAL IEEE 11 July 2005 - 15 July 2005, pages 386 - 392, XP003006537
- KAKIMOTO N. ET AL.: 'Subsynchronous resonance damping control of thyristor-controlled series capacitor' IEEE TRANSACTIONS ON POWER DELIVERY, IEEE, USA vol. 18, no. 3, July 2003, pages 1051 - 1059, XP003006538

## Description

### TECHNICAL FIELD

The present invention concerns control of oscillations in an electric power system. Especially the invention concerns such control by means of a thyristor controlled series connected capacitors (TCSC). The electric power system comprises an electric circuit and a mechanical circuit in cooperation. The mechanical circuit comprises an electric generator and a turbine connected to each other by a shaft. In particular the invention concerns damping of subsynchronous resonances (SSR) in such a power system

### BACKGROUND OF THE INVENTION

Oscillations of active power in power transmission systems may arise in corridors between generating areas and load areas as a result of poor damping of the interconnection, particularly during heavy power transfer. Such oscillations can be excited by a number of reasons such as line faults or a sudden change of generator output or loading.

The control offered by TCSC is an 'impedance' type control. The inserted voltage is proportional to the line current. This type of control normally is best suited to applications in power flow corridors, where a well-defined phase angle difference exists between the ends of the transmission line to be compensated and controlled.

An important benefit of TCSC is the ability for quick control of the degree of compensation. This makes the TCSC very useful as a tool for improving the post-contingency behavior of networks. By means of this quality of the TCSC, the degree of compensation of a series capacitor is increased temporarily following upon a network contingency. Dynamic stability is thereby added to the network (voltage and angle) precisely when it is needed. Further active modulation of the boosting of the TCSC (in dependence of some locally measured quantity, e.g. active power) is used to provide damping of electromechanical oscillations (0.1-2 Hz) in the interconnected transmission system. By this feature, the series capacitor may be lower rated for steady-state conditions, thereby keeping costs low.

I n a TCSC, the whole capacitor bank, or alternatively a section of the capacitor bank, is provided with a parallel thyristor controlled inductor which circulates current pulses that add in phase with the line current. The capacitive voltage is thereby boosted beyond the level that would be obtained by the line current alone. Each thyristor is triggered once per cycle and has a conduction interval that is shorter than half a cycle of the rated mains frequency. By controlling the additional voltage to be proportional to the line current, the TCSC will be seen by the transmission system as having a virtually increased reactance beyond the physical reactance of the capacitor.

TCSC offers a unique possibility to apply series compensation in networks where the risk for Sub Synchronous Resonance (SSR) is a concern. SSR may arise when complementary series resonance frequency of a compensated line coincides with a poorly damped torsional vibration frequency of the turbo-generator shaft. The interaction that results may exhibit very low or even negative damping. It may cause a torsional oscillation with very high amplitude in the turbine-generator shaft system. Such oscillation induces very high mechanical stress in the shaft. The TCSC acts to eliminate this risk for coinciding resonance frequencies by making the series capacitors act inductive in the subsynchronous frequency band. The occurrence of series resonance in the transmission system would thereby be rendered impossible for subsynchronous frequencies altogether. Inserting a TCSC thus may alleviate limitations on the degree of compensation that are caused by concerns for SSR. Thereby the transfer capability of the transmission system increases.

The control system for a TCSC has to take into account a number of requirements that each is influenced by the control system response in certain time ranges:
- SSR behavior, influenced by the TCSC response to line current changes within less than 10 ms (frequency range 10 to 50 Hz),
- inserted reactance control at the power frequency, influenced by TCSC response to line current amplitude changes during 50-100 ms, and
- power system control, e.g. adding damping to electromechanical power swings, influenced by the TCSC response during several cycles i.e. 100-5000 ms (frequency range 0.1 to 2 Hz).

A natural approach would be to implement the control system as a layered control structure where each layer acts with a certain time horizon and where the layer with the shortest 'memory' is located closest to the TCSC. A major advantage with this approach is that it becomes possible to treat the different control objectives separately.

From US 5,801,459 a method and a control equipment for a series capacitor connected into an electric power line is previously known. The object of the control equipment is to provide simple and, in principle, lossless equipment which efficiently damps subsynchronous resonances independently of variations in the operating conditions. In the known equipment a thyristor valve is controlled in such a way that the apparent impedance of the series capacitor equipment within the whole range in which the SSR oscillation may occur becomes inductive instead of capacitive.

The known equipment controls the semiconductor valve such that the capacitor voltage zero crossings remain equidistant during processes when the line current contains subsynchronous components. The series capacitor equipment will systematically exhibit an inductive character within the whole frequency range which is of interest for SSR. This inductive character is achieved independently of the control state of the capacitor, independently of the characteristics of the power line or the power network, and independently of the magnitude of the fundamental component of the current in the power line.

The capacitor means and the parallel path containing the thyristor switched reactor forms a TCSC. The control equipment comprises a firing circuit which upon a command signal sends a firing pulse to the thyristor valve. Based on the measured instantaneous values of capacitor voltage and line current, this circuit compensates the varying delay between the firing of the thyristor valve and the zero crossing of the capacitor voltage which arises because of the finite reversal time of the thyristor-inductor-capacitor circuit. The compensating firing circuit delivers firing pulses to the thyristor valve. The control equipment also comprises a boost controller which by sending command orders to the firing circuit effectuates the boost level of desire.

Although the control equipment according to US 5,801,459 effectively reduces the negative damping at a wide frequency range where the SSR is likely to appear it still is dependent on the presence of a positive mechanical damping in the system. In a real system mechanical damping always exists and it is positive although the damping coefficient is very small. The main obstacle is that it is very difficult to determine a definite value of mechanical damping. Some values may be obtained by measurements on the generator once it has been installed. It is not possible, however, to get guaranteed calculated values during the design stage. Therefore the potential risk of SSR must be evaluated based on assumed mechanical damping values obtained from earlier experience.

### SUMMARY OF THE INVENTION

A primary object of the present invention is to seek ways to improve the control of a power network to mitigate the occurrence of subsynchronous resonances (SSR) that could harm the mechanic or the electric equipment.

This object is achieved according to the invention by a control apparatus characterized by the features in the independent claim 1 or by a method characterized by the steps in the independent claim 6. Preferred embodiments are described in the dependent claims.

According to the invention a TCSC is controlled to produce a positive damping of the power modulation in a narrow band around a discrete frequency. The discrete frequency is selected in advance and represents a natural frequency of the torsional oscillation of the mechanical system. Thus when such discrete modulation frequency appears on the transmission line the TCSC is controlled to increase the damping in a narrow band around the discrete frequency. Hence by safeguarding a positive damping from the electric network the power system is not dependent on a positive damping of the mechanical system.

The discrete frequency of selection is a natural frequency resulting from a calculation of oscillation behaviour of the system. The discrete frequency may also be chosen from sensed natural frequencies on the transmission line. Hence the damping control may be defined from an apparent situation and does not have to be defined prior the erection of the power plant. In an embodiment of the invention damping is arranged for a plurality of discrete frequencies.

In an embodiment of the invention the appearance of a discrete frequency is sensed by a bandpass filter acting on the measured active power in the transmission line. On sensing a signal indicating the presence of such frequency the signal is gained and phase shifted and supplied to the firing circuit of the control equipment for the TCSC, thereby performing a positive damping in a small range around the sensed discrete frequency.

In a further embodiment of the invention the control equipment for the TCSC comprises a damping controller and a firing circuit. The damping controller receives the information of the appearance of a discrete frequency and provides a control signal to the firing circuit which provides damping in a narrow band around the discrete frequency. In an embodiment the damping control receives feedback information from local measurements on the power line to control the output signal to the firing circuit.

In yet a further embodiment of the invention the control equipment comprises a boost controller and a phase-locked loop (PLL). In this embodiment the signal from the boost control and the signal from the damping control is combined and supplied to the firing circuit. In yet a further embodiment the damping signal may be combined with the signal from the PLL. As the electrical damping is brought close to the zero line by the use of TCSC with the firing control a fairly small additional feedback control is needed to make the electrical damping definite positive thereby eliminating the dependence on the mechanical damping.

An ideal damping system takes the speed variation of the generator as input and controls an actuator that produces a proportional breaking torque variation. However, normally the generator is positioned remote from the series capacitor installation and it is difficult and expensive to provide secure signal transmission with sufficient small delay. Utilizing local signals that are as tightly related to the generator speed variation as possible is thus advantageous.

The topology of the power system determines how difficult or easy it is to implement such an additional feedback damping. The radial system, which is by its topology most prone to experience SSR problems, also is the one in which a reliable additional damping can most easily be implemented.

The total power flow in a radial transmission system reflects the phase angle of the generator relative the remaining power system. The total power is high whenever the generator phase is phase advanced relative the rest of the network and it is low when the phase is retarded. Therefore variations in the generator phase are extracted from local measurements of the total active power flow in the corridor at the series capacitor installation. Other quantities, like local frequency, are also used to derive information about the actual generator phase or speed deviations.

From measured quantities adequate control signals are created, which is added to the TCSC control in such a way that a positive contribution to the electrical damping results. Often the critical mechanical frequencies in the shaft system in the generating plant are known and then the added signal is shaped to provide damping at such selected known frequencies.

A damping system according to the invention contains a TCSC control system with thyristor firing control according to the algorithm for exactly determine the exact moment for firing the thyristors and an additional feedback damping system that takes a locally measured signal as input and provides an output signal, which is used as an input signal to the firing control. Thus the damping signal is added to the boost control output signal or the PLL signal.

In a first aspect of the invention the object is achieved by a control apparatus of a thyristor controlled series capacitor means connected to a power transmission line, the control apparatus comprising a thyristor firing control responsive to a command signal for effectuating firing pulses to the thyristor valve in the dependence of the line current and the capacitor voltage to cause valve switching at desired instants, a command control responsive to an outer phase reference signal for effectuating command pulses to the thyristor firing control, wherein the command control comprises a damping control responsive to the presence of a discrete frequency on the transmission line for effectuating command signals to the thyristor firing control to achieve positive damping of the network at a frequency range around the discrete frequency. In an embodiment of the invention the command control comprises a boost control and a phase-locked loop.

In a second aspect of the invention the object is achieved by a method for providing a positive damping of a discrete frequency oscillation present on a power transmission line, the power transmission line comprising a thyristor controlled series capacitor means with a thyristor firing control, the method comprising, providing a signal representing the oscillation present on a power transmission line, filtering the signal, sensing the presence of the discrete frequency, phase shifting the signal, and sending a command signal to the thyristor firing control for effectuating the damping effect.

### BRIEF DESCRIPTION OF THE DRAWINGS

Features and advantages of the present invention will become more apparent to a person skilled in the art from the following detailed description in conjunction with the appended drawings in which:
Fig 1 is a principal layout of a mechanic system connected to an electric system,
Fig 2 is principal circuit of a control apparatus according the invention, Fig 3 is a diagram showing the effect of the control apparatus,
Fig 4 is one embodiment of the control apparatus according to the invention, and
Fig 5 is a further embodiment of the control apparatus.

### DESCRIPTION OF PREFERRED EMBODIMENTS

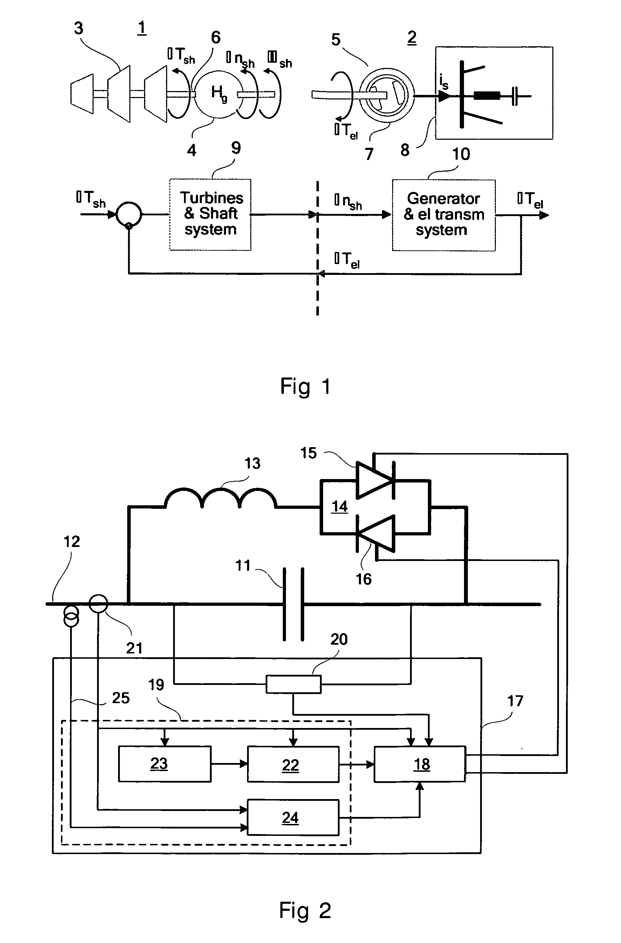

Fig 1 illustrates mechanical system 1 connected to an electrical system 2. The mechanical system comprises a turbine 3 and the rotor part 4 of a generator 5 connected to the turbine with a shaft 6. The electrical system comprises the stator part 7 of the generator and the network 8 connected to the generator. The mechanical shaft system is characterized by the small-signal transfer function from applied torque deviation to shaft speed deviation ("Turbines & Shaft system"). The electrical system can be represented by the block "Generator & el transm system", which has the transfer function from applied speed deviation to electrical torque deviation. These two transfer functions are connected in cascade. The stability of the feed-back system is determined by the properties in the electrical system.

When the shaft speed of the generator is modulated with frequency *f_{mech}* its phase relative the rest of the electrical network will vary with the same frequency. The active power exchange with the network then fluctuates with frequency *f_{mech}.* The phase modulation introduces sub-and super-synchronous currents in the transmission system. These currents have the frequencies *f_{gen}- f_{mech}* and *f_{gen}+ f_{mech}* respectively. The subsynchronous frequency *f_{gen}*- *f_{mech}* is close to *f_{gen}* when *f_{mech}* is small and then the network impedance is inductive as the degree of compensation is less than 100%. Then the electrical torque variation counteracts the speed modulation. However, when the modulation frequency *f_{mech}* increases the subsynchronous frequency *f_{gen}- f_{mech}* decreases. If the line is series compensated with a passive capacitor bank the network impedance becomes capacitive at a certain frequency and then the electromechanical torque created by the subsynchronous current instead amplifies the shaft speed modulation, making the oscillation amplitude increase.

A thyristor controlled series capacitor (TCSC) means according to the invention is described in fig 2. A capacitor means 11 is series connected on an electric power transmission line 12. A second path in parallel with the capacitor means comprises an inductor means 13 and a thyristor switch 14. The thyristor switch comprises a first 15 and second 16 thyristor means arranged in antiparallel paths. Further the TCSC comprises a control apparatus 17 arranged to effectuate the control of the thyristor switch in response to a desired operation.

The control apparatus comprises a firing control 18 and a command control 19. The control apparatus further comprises a voltage sensing means 20 arranged to measure the capacitor voltage and a current sensing means 21. A further voltage sensing means 25 is arranged to measure the line voltage. The voltage sensing means may comprise by way of example a voltage transformer or a voltage divider with optical signal transmission. The firing control comprises computer means to calculate in response to a command signal and the capacitor voltage the exact moment to fire the thyristors to effectuate a zero crossing of the capacitor voltage at an instant desired by the command.

The command control comprises a boost control 22 and a phase-locked loop (PLL) means 23 for providing equidistant command pulses to the command control. The command control further comprises a damping control 24. The damping control calculates a damping signal in response to the line current and line voltage. The damping control comprises filtering means to detect a discrete frequency from local measurements. Hence the damping control operates on signal comprising a combination of the line current and voltage signals on the transmission line (e.g. active power). Further the damping means comprises computer means for effectuating a command signal to the firing control to the effect of producing a positive damping of the electric network in a narrow band around the discrete frequency. The discrete frequency is a chosen frequency from one of the natural frequencies of the mechanical system. By providing a positive damping at frequency bands around such a discrete frequency to fade out an exited natural frequency is ensured.

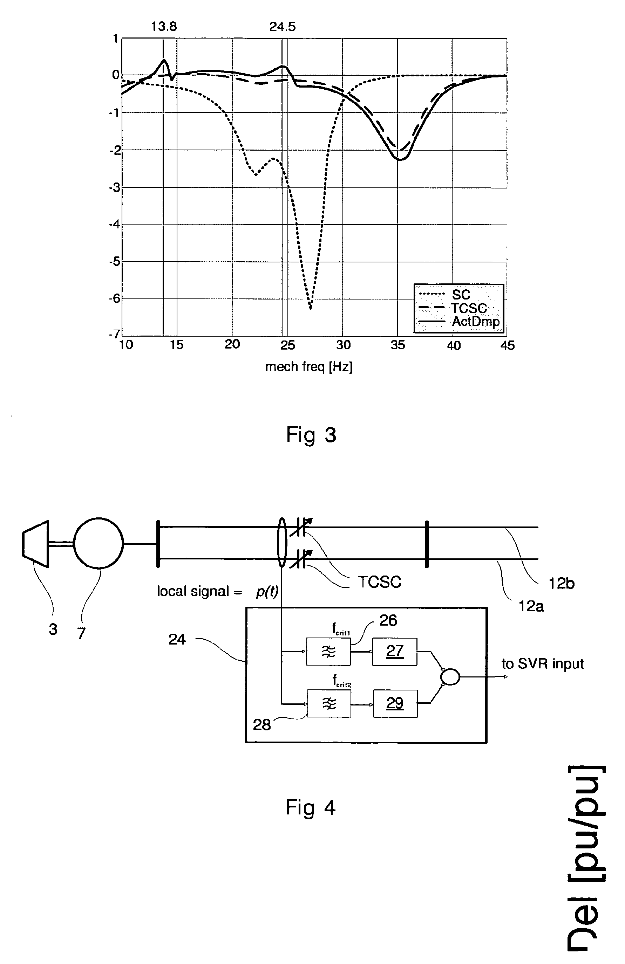

In general the damping conditions for the electrical subsystem can be characterized by a curve that shows the relation between the component in phase with the speed modulation of the electrical torque and the speed modulation itself. In fig 3 depicts such curves for a specific generator in a radial transmission network. The dotted curve shows negative electrical damping in a wide frequency range from 15 Hz to about 30 Hz resulting from electrical damping for series compensation using fixed capacitor banks only. These characteristics make it impossible to utilize series compensation with the given degree of compensation if the generator shaft system has any significant swing mode within this range.

The reactance of the inductance in the TCSC is much smaller than the reactance of the capacitor bank; typically the ratio ranges from 5 to 15 times. The TCSC is phase-angle controlled and the thyristor branch is passed by short current pulses during each half-cycle of the network frequency. The TCSC has a distinctly different response to subsynchronous line currents than the fixed series capacitor. At low frequency the apparent impedance of the TCSC approaches zero whereas the reactance for a fixed series capacitor approaches negative infinity. Experiments has shown that the apparent impedance of the thyristor controlled part of the TCSC can be kept inductive in the whole subsynchronous resonance frequency range from about 10 Hz to approximately 30-45 Hz (50 Hz system) or 40-55 Hz (60 Hz). When a portion of the installed fixed series capacitors is being replaced by a TCSC the electrical damping curve is modified as is shown by the broken line in fig 3.

Fig 3 also depicts the electrical damping curve, black line, in a certain case where additional damping according to the invention has been added at the mechanical frequencies 13.8 Hz and 24.5 Hz. In the example the bandwidth of the active damping at the lower frequency has been selected narrower than at the higher frequency.

Figure 4 shows a radial system having several parallel lines in a bulk power transmission corridor. A turbine 3 and a generator 7 are connected to a first transmission line 12a and a second transmission line 12b. Both transmission lines comprise a TCSC according to the invention. A damping control 24 senses a local signal p(t) from the first and second transmission line. The signal is filtered by a first bandpass filter 26 and a second bandpass filter 28. These filters are tuned to detect a discrete frequency of desire. On appearance of a signal from the first filter the signal a first gain controller 27 is phase shifting the signal. On appearance of a signal from the second filter a second gain controller 29 is phase shifting the signal. Both of these signals are added before sending to the firing control.

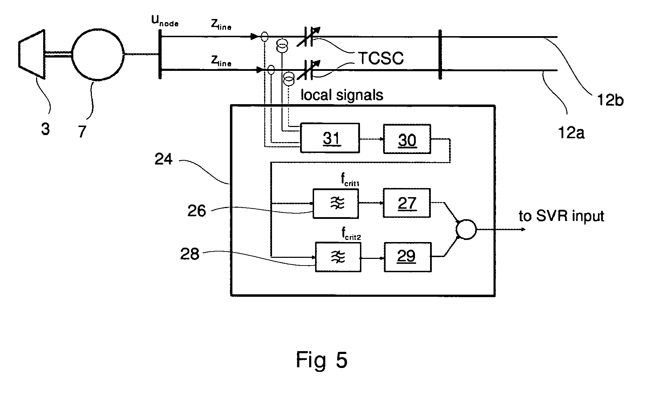

Another alternative uses the measured voltage and current at the TCSC site. The impedance of the line from the site to the node close to the generator is known and therefore it is possible to estimate the voltage vector at that node. The speed (frequency) of the voltage vector reflects the mechanical speed of the generator. Thus it can be used as an input signal for the additional damping system. Figure 5 illustrates this system.

In fig 5 a second embodiment of the damping control is shown. The second embodiment has the same principal structure as the embodiment in fig 4, and uses the same indication numbers. In this embodiment however the signal sensed by the filters has been evaluated from both current measurement and voltage measurement on both of the transmission lines. An estimating means 31 is delivering a signal to a frequency measurement means 30 on a response to the information gained from the transmission lines. The first 26 and second 28 filters are arranged to detect the presence of a first and second discrete frequency from the signal supplied from the measurement means 30.

Although favorable the scope of the invention must not be limited by the embodiments presented but contain also embodiments obvious to a person skilled in the art. For instance the filter means may comprise a plurality of filters, each designed to detect the presence of at least one of a plurality of desired discrete frequencies.

The scope of protection is solely defined by the claims.

## Claims

1. A control apparatus (17) for controlling a thyristor controlled series capacitor means connected to a power transmission line (12), the control apparatus (17) comprising a thyristor firing control (18) comprising means for effectuating a desired capacitor voltage zero crossing in dependence of the line current and the capacitor voltage in response to a command signal, and a command control (19) for providing the command signal to the thyristor firing control (18), characterized i n that the command control (19) is configured to receive measures of the line voltage of the power transmission line and comprises a damping control (24) for providing damping of at least one discrete frequency, which damping control (24) comprises at least one bandpass filter (26, 28) to detect signals in a narrow band around a corresponding one of the at least one discrete frequencies of the line current and line voltage, and which damping control (24) comprise computer means configured to calculate and provide a command signal to the thyristor firing control (18) for producing a damping in the narrow band around the corresponding at least one discrete frequency.

2. A control apparatus (17) according to claim 1, wherein the command control (19) comprises a boost control (22) and a phase-locked loop (23) to provide the command signal depending on the line current and capacitor voltage to the firing control (18), which command signal from the boost control (22) comprises equidistant command pulses, wherein the command signal from the boost control (22) and the command signal from the damping control (24) are combined.

3. A control apparatus (17) according to claim 2, wherein the bandwidth of the firing control (18) is higher than the bandwidth of the boost control (22) and the phase-locked loop (23).

4. A control apparatus (17) according to claims 2 and 3, wherein in absence of a discrete frequency the command control (19) effectuates an equidistant capacitor voltage zero crossing.

5. A control apparatus (17) according to any of the preceding claims, wherein the damping control (24) comprises an amplifying and phase shifting means (27).

6. Method for providing a positive damping of a discrete frequency oscillation present on a power transmission line (12), the power transmission line (12) comprising a thyristor controlled series capacitor means with a thyristor firing control (18), the method comprises measuring the transmission line current and the capacitor voltage, providing a command signal comprising equidistant command pulses based on the transmission line current to the thyristor firing control (18), calculating the exact moment to fire the thyristors to effectuate a zero crossing of the capacitor voltage, which calculating is based on the command pulses of the command signal and the capacitor voltage, and is **characterized by** measuring the line voltage of the transmission line, providing a signal representing the oscillation present on a the power transmission line from the measured line voltage, filtering the signal in a narrow band around the discrete frequency, sensing the presence of the discrete frequency, phase shifting the signal, and sending a command signal to the thyristor firing control (18) for effectuating the damping effect in the narrow band around the discrete frequency.

7. Method according to claim 6, wherein the signal is the frequency of the estimated voltage in a node close to a generator connected to the power transmission line (12), and the estimated voltage is reconstructed from the measured line current and voltage at the position of the thyristor controlled series capacitor means using the known impedance of the power transmission line between the position of the thyristor controlled series capacitor means and the generator.

8. Computer program product storable on a computer usable medium containing instructions for a command control (19) for a thyristor controlled series capacitor arranged at a transmission line, which command control (19) is configured for receiving measurements of a line current of the transmission line, a line voltage of the transmission line and a capacitor voltage of the thyristor controlled series capacitor, which computer program instructions, when executed by the command control (19), enables the command control to perform the following method steps:
- providing a first command signal comprising equidistant command pulses based on the transmission line current for a thyristor firing control (18) of the thyristor controlled series capacitor,
- providing a signal representing the oscillation present on the power transmission line from the measured line voltage,
- filtering the signal in a narrow band around the discrete frequency,
- detecting the presence of the discrete frequency,
- phase shifting the signal, and
- providing a second command signal for the thyristor firing control (18) for effectuating the damping effect in the narrow band around the discrete frequency.

9. Computer program product according to claim 8 provided at least in part over a network, such as the Internet.

10. Computer readable medium, **characterized in that** it contains a computer program product according to claim 8.

## Patentansprüche

1. Steuerungsvorrichtung (17) zur Steuerung einer an eine Stromübertragungsleitung (12) angeschlossenen thyristorgesteuerten Reihenkondensatoreinrichtung, wobei die Steuerungsvorrichtung (17) eine Thyristorzündsteuerung (18), umfassend eine Einrichtung zur Realisierung eines gewünschten Kondensatorspannungsnulldurchgangs in Abhängigkeit von dem Leitungsstrom und der Kondensatorspannung als Reaktion auf ein Befehlssignal sowie eine Befehlssteuerung (19) zum Senden des Befehlssignals an die Thyristorzündsteuerung (18), umfasst, **dadurch gekennzeichnet, dass** die Befehlssteuerung (19) dafür konfiguriert ist, Messwerte der Leitungsspannung der Stromübertragungsleitung zu empfangen, und eine Dämpfungssteuerung (24) zum Dämpfen von mindestens einer diskreten Frequenz umfasst, wobei die Dämpfungssteuerung (24) mindestens einen Bandpass-Filter (26, 28) zur Erkennung von Signalen in einem schmalen Bereich um eine mindestens einer der diskreten Frequenzen des Leitungsstroms und der Leitungsspannung entsprechenden Frequenz aufweist, und wobei diese Dämpfungssteuerung (24) eine Computereinrichtung umfasst, die dafür konfiguriert ist, ein Befehlssignal zu berechnen und an die Thyristorzündsteuerung (18) zur Erzeugung einer Dämpfung in dem schmalen Bereich um die mindestens einer diskreten Frequenz entsprechende Frequenz zu senden.

2. Steuerungsvorrichtung (17) nach Anspruch 1, wobei die Befehlssteuerung (19) eine Boost-Steuerung (22) und eine Phasenverriegelungsschleife (23) zum Senden des Befehlssignals in Abhängigkeit von dem Leitungsstrom und der Kondensatorspannung an die Zündsteuerung (18) umfasst, wobei das Befehlssignal von der Boost-Steuerung (22) äquidistante Befehlsimpulse umfasst, wobei das Befehlssignal von der Boost-Steuerung (22) und das Befehlssignal von der Dämpfungssteuerung (24) kombiniert werden.

3. Steuerungsvorrichtung (17) nach Anspruch 2, wobei die Bandbreite der Zündsteuerung (18) höher ist als die Bandbreite der Boost-Steuerung (22) und der Phasenverriegelungsschleife (23).

4. Steuerungsvorrichtung (17) nach den Ansprüchen 2 und 3, wobei bei Nichtvorhandensein einer diskreten Frequenz die Befehlssteuerung (19) einen äquidistanten Kondensatorspannungsnulldurchgang bewirkt.

5. Steuerungseinrichtung (17) nach einem der vorhergehenden Ansprüche, wobei die Dämpfungssteuerung (24) eine Verstärkungs- und Phasenverschiebungseinrichtung (27) umfasst.

6. Verfahren zur Bereitstellung einer positiven Dämpfung einer in einer Stromübertragungsleitung (12) vorhandenen diskreten Frequenzschwingung, wobei die Stromübertragungsleitung (12) eine thyristorgesteuerte Reihenkondensatoreinrichtung mit einer Thyristorzündsteuerung (18) umfasst, das Verfahren die Messung des Übertragungsleitungsstroms und der Kondensatorspannung, die Sendung eines Befehlssignal, umfassend äquidistante Befehlsimpulse basierend auf dem Übertragungsleitungsstrom an die Thyristorzündsteuerung (18), die Berechnung des genauen Zeitpunkts zum Zünden der Thyristoren, um einen Nulldurchgang der Kondensatorspannung zu bewirken, wobei die Berechnung auf den Befehlsimpulsen des Befehlssignals und der Kondensatorspannung basiert, umfasst und **gekennzeichnet ist durch** die Messung der Leitungsspannung der Übertragungsleitung, die Sendung eines die in der Stromübertragungsleitung vorhandenen Schwingung repräsentierenden Signals von der gemessenen Leitungsspannung, die Filterung des Signals in einem schmalen Bereich um die diskrete Frequenz, die Erfassung des Vorhandenseins der diskreten Frequenz, die Phasenverschiebung des Signals und die Sendung eines Befehlssignals an die Thyristorzündsteuerung (18) zur Realisierung der Dämpfungswirkung in dem schmalen Bereich um die diskrete Frequenz.

7. Verfahren nach Anspruch 6, wobei das Signal die Frequenz der geschätzten Spannung in einem Knoten nahe einem an die Stromübertragungsleitung (12) angeschlossenen Generator ist und die geschätzte Spannung aus dem gemessenen Leitungsstrom und der gemessenen Leitungsspannung an der Position der thyristorgesteuerten Reihenkondensatoreinrichtung mittels des bekannten Scheinwiderstands der Stromübertragungsleitung zwischen der Position der thyristorgesteuerten Reihenkondensatoreinrichtung und dem Generator rekonstruiert wird.

8. Auf einem computergeeigneten Medium gespeichertes Computerprogrammprodukt, enthaltend Anweisungen für eine Befehlssteuerung (19) für einen in einer Übertragungsleitung angeordneten thyristorgesteuerten Reihenkondensator, wobei die Befehlssteuerung (19) dafür konfiguriert ist, Messwerte eines Leitungsstroms der Übertragungsleitung, einer Leitungsspannung der Übertragungsleitung und einer Kondensatorspannung des thyristorgesteuerten Reihenkondensators zu empfangen, wobei die Computerprogrammanweisungen, wenn sie von der Befehlssteuerung (19) ausgeführt werden, der Befehlssteuerung ermöglichen, die folgenden Verfahrensschritte durchzuführen:
- Sendung eines ersten Befehlssignals, das äquidistante Befehlsimpulse basierend auf dem Übertragungsleitungsstrom für eine Thyristorzündsteuerung (18) des thyristorgesteuerten Reihenkondensators umfasst,
- Sendung eines Signals, das die in der Stromübertragungsleitung von der gemessenen Leitungsspannung vorhandene Schwingung repräsentiert,
- Filterung des Signals in einem schmalen Bereich um die diskrete Frequenz,
- Erkennung des Vorhandenseins der diskreten Frequenz,
- Phasenverschiebung des Signals, und
- Sendung eines zweiten Befehlssignals für die Thyristorzündsteuerung (18) zur Realisierung der Dämpfungswirkung in dem schmalen Bereich um die diskrete Frequenz.

9. Computerprogrammprodukt nach Anspruch 8, bereitgestellt zumindest teilweise über ein Netz, beispielsweise das Internet.

10. Computerlesbares Medium, **dadurch gekennzeichnet, dass** es ein Computerprogrammprodukt nach Anspruch 8 enthält.

## Revendications

1. Appareil de commande (17) pour commander un moyen de type condensateur série commandé par thyristor connecté à une ligne de transmission électrique (12), lequel appareil de commande (17) comprend une commande de déclenchement de thyristor (18) comprenant un moyen pour effectuer un passage à zéro de tension de condensateur voulu en fonction du courant de la ligne et de la tension du condensateur en réponse à un signal d'instruction, et une commande d'instruction (19) pour fournir le signal d'instruction à la commande de déclenchement de thyristor (18), **caractérisé en ce que** la commande d'instruction (19) est conçue pour recevoir des mesures de la tension de ligne de la ligne de transmission électrique et comprend une commande d'amortissement (24) afin d'assurer l"amortissement d'au moins une fréquence discrète, laquelle commande d'amortissement (24) comprend au moins un filtre de bande passante (26, 28) afin de détecter des signaux dans une bande étroite autour d'une fréquence correspondante parmi ladite au moins une des fréquences discrètes de la ligne de courant et de la ligne de tension, et laquelle commande d'amortissement (24) comprend un moyen informatique conçu pour calculer et fournir un signal d'instruction à la commande de déclenchement de thyristor (18) afin d'effectuer un amortissement dans la bande étroite autour de ladite au moins une fréquence discrète correspondante.

2. Appareil de commande (17) selon la revendication 1, dans lequel la commande d'instruction (19) comprend une commande d'amplification (22) et une boucle à verrouillage de phase (23) afin de fournir le signal d'instruction en fonction du courant de ligne et de la tension de condensateur à la commande de déclenchement (18), lequel signal d'instruction provenant de la commande d'amplification (22) comprend des impulsions d'instruction équidistantes, le signal d'instruction provenant de la commande d'amplification (22) et le signal d'instruction provenant de la commande d'amortissement (24) étant combinés.

3. Appareil de commande (17) selon la revendication 2, dans lequel la largeur de bande de la commande de déclenchement (18) est supérieure à la largeur de bande de la commande d'amplification (22) et de la boucle à verrouillage de phase (23).

4. Appareil de commande (17) selon les revendications 2 et 3, dans lequel en l'absence d'une fréquence discrète, la commande d'instruction (19) effectue un passage à zéro de tension de condensateur équidistant.

5. Appareil de commande (17) selon l'une quelconque des revendications précédentes, dans lequel la commande d'amortissement (24) comprend un moyen d'amplification et de décalage de phase (27).

6. Procédé pour assurer un amortissement positif d'une oscillation de fréquence discrète présente sur une ligne de transmission électrique (12), la ligne de transmission électrique (12) comprenant un moyen de type condensateur série commandé par thyristor avec une commande de déclenchement de thyristor (18), lequel procédé consiste à mesurer le courant de ligne de transmission et la tension de condensateur, à fournir un signal d'instruction comprenant des impulsions d'instruction équidistantes en fonction du courant de la ligne de transmission à la commande de déclenchement de thyristor (18), à calculer le moment exact de déclenchement des thyristors afin d'effectuer un passage à zéro de la tension de condensateur, le calcul étant fonction des impulsions d'instruction du signal d'instruction et de la tension de condensateur, **caractérisé en ce qu'**il consiste à mesurer la tension de ligne de la ligne de transmission, à produire un signal représentant l'oscillation présente sur une ligne de transmission électrique à partir de la tension de ligne mesurée, à filtrer le signal dans une bande étroite autour de la fréquence discrète, à détecter la présence de la fréquence discrète, à décaler la phase du signal, et à envoyer un signal d'instruction à la commande de déclenchement de thyristor (18) afin de réaliser l'effet d'amortissement dans la bande étroite autour de la fréquence discrète.

7. Procédé selon la revendication 6, dans lequel le signal est la fréquence de la tension estimée dans un noeud proche d'un générateur connecté à la ligne de transmission électrique (12), et la tension estimée est reconstruite à partir du courant et de la tension de ligne mesurés à la position du moyen de type condensateur série commandé par thyristor en utilisant l'impédance connue de la ligne de transmission électrique entre la position du moyen de type condensateur série commandé par thyristor et du générateur.

8. Produit de type programme informatique stockable sur un support utilisable par ordinateur, contenant des instructions pour une commande d'instruction (19) pour un condensateur série commandé par thyristor disposé au niveau d'une ligne de transmission, laquelle commande d'instruction (19) est conçue pour recevoir des mesures de courant de ligne de la ligne de transmission, une tension de ligne de la ligne de transmission et une tension de condensateur du condensateur série commandé par thyristor, lesquelles instructions de programme informatique vont, lorsqu'exécutées par la commande d'instruction (19), activer la commande d'instruction pour qu'elle effectue les étapes du procédé suivantes :
- produire un premier signal d'instruction comprenant des impulsions d'instruction équidistantes en fonction du courant de la ligne de transmission pour une commande de déclenchement de thyristor (18) du condensateur série commandé par thyristor ;
- produire un signal représentant l'oscillation présente sur la ligne de transmission électrique à partir de la tension de ligne mesurée ;
- filtrer le signal dans une bande étroite autour de la fréquence discrète ;
- détecter la présence de la fréquence discrète ;
- décaler la phase du signal ; et
- produire un second signal d'instruction pour la commande de déclenchement de thyristor (18) afin de réaliser l'effet d'amortissement dans la bande étroite autour de la fréquence discrète.

9. Produit de type programme informatique selon la revendication 8 fourni au moins en partie sur un réseau, tel que l'Internet.

10. Support lisible par ordinateur, **caractérisé en ce qu'**il contient un produit de type programme informatique selon la revendication 8.
